# EUROPÄISCHE PATENTANMELDUNG

(11) **EP 4 113 809 A1**
(43) Veröffentlichungstag der Anmeldung: **04.01.2023**
(21) Anmeldenummer: 21183299.3
(22) Anmeldetag: 01.07.2021
(51) Int. Cl.: H02M 1/36, C25B 15/00, C25B 1/04, H01M 8/18

(54) **VERFAHREN ZUM AUFSTARTEN EINER ELEKTROLYSEANLAGE UND ELEKTROLYSEANLAGE ZUR DURCHFÜHRUNG DES VERFAHRENS**

(71) Anmelder: SMA Solar Technology AG, 34266 Niestetal (DE); sunfire GmbH, 01237 Dresden (DE)
(72) Erfinder: UNRU, Alexander, 34225 Baunatal (DE); KOCH, Rafael, 01099 Dresden (DE)

(57) **Zusammenfassung**

Es wird ein Verfahren zum Aufstarten einer Elektrolyseanlage (50) beschrieben, umfassend einen Elektrolyseur (22) und eine als Gleichrichter operierende Versorgungseinheit (10). Dabei weist die Versorgungseinheit (10)einen mit einem AC-Netz (30) verbundenen AC-Anschluss (11), einen mit dem Elektrolyseur (22) verbundenen DC-Anschluss (12) und einen zwischen dem AC-Anschluss (11) und dem DC-Anschluss (12) angeordneten AC/DC-Wandler (3) auf. Das Verfahren umfasst die Schritte:
- Aufladen einer mit einem DC-Wandleranschluss (3.2) des AC/DC-Wandlers (3) verbundenen Ausgangskapazität (4) durch Betreiben des Elektrolyseurs (22) in einem Revers-Betrieb als DC-Spannungsquelle, in einem mit dem Elektrolyseur (22) verbundenen und von dem AC-Netz (30) getrennten Zustand des AC/DC-Wandlers (3),
- Verbinden des AC/DC-Wandlers (3) mit dem AC-Netz (30),
- Betriebsumkehr des Elektrolyseurs (22) von dem Revers-Betrieb in einen Normal-Betrieb als DC-Last, und
- Betreiben des Elektrolyseurs (22) in dem Normal-Betrieb als DC-Last mit einer über die Versorgungseinheit (10) aus dem AC-Netz (30) entnommenen und über den AC/DC-Wandler (3) gleichgerichteten elektrischen Leistung. Weiterhin ist eine Elektrolyseanlage (50) beschrieben.

## Beschreibung

### Technisches Gebiet der Erfindung

Die Erfindung betrifft ein Verfahren zum Aufstarten einer Elektrolyseanlage sowie eine zur Durchführung des Verfahrens ausgelegte und eingerichtete Elektrolyseanlage.

### Stand der Technik

Es ist bekannt, Elektrolyseanlagen zur elektrolytischen Erzeugung von Wasserstoff aus Wasser in dem sogenannten Power-To-Gas Verfahren einzusetzen. Der Elektrolyseur ist dabei über eine als Gleichrichter operierende Versorgungseinheit an ein Wechselspannungsnetz (AC-Netz) angeschlossen, die den Elektrolyseur mit einer Gleichspannung (DC-Spannung) versorgt und auch dessen Wasserstoff-Erzeugungsrate über eine Änderung der an den Elektrolyseur übergebenen DC-Spannung steuert. Üblicherweise nimmt dabei die Wasserstoff - Erzeugungsrate mit einer ansteigenden an dem DC-Eingang des Elektrolyseurs anliegenden DC-Spannung und einer damit einhergehenden Leistungsentnahme aus dem AC-Netz, zumindest in einem gewissen Betriebsbereich für die DC-Spannung, zu.

Eine herkömmliche als Gleichrichter operierende Versorgungseinheit beinhaltet einen AC/DC-Wandler, dessen Brückenschaltung Transistoren mit jeweils einer dazu antiparallel verschalteten Diode als Freilaufdiode aufweisen. Bei den Dioden kann es sich um eine separate oder eine intrinsische Diode - eine sogenannte Body-Diode - des Transistors handeln. Um einen Stromstoß in eine DC-seitig mit dem AC/DC-Wandler verbundene und beim Aufstarten zunächst ungeladene Kapazität zu vermeiden, weist die Versorgungseinheit sowohl eine AC-seitige, als auch eine DC-seitige Vorladeeinheit auf. Die Vorladeeinheit umfasst typischerweise eine Serienschaltung eines Vorladewiderstandes und eines Vorladeschalters und einen zu der Serienschaltung parallel geschalteten Schalter. Bei einem Aufstarten der Elektrolyseanlage wird nun zunächst die mit einem DC-Wandleranschluss des AC/DC-Wandlers verbundene Ausgangskapazität über einen dem AC-Netz entnommenen und über den Vorladewiderstand der AC-seitigen Vorladeeinheit geführten Strom vorgeladen. Der Vorladewiderstand dient dabei zur Begrenzung des Stroms in die ungeladene Ausgangskapazität. Bei Erreichen eines Spannungsschwellwertes für die an der Ausgangskapazität anliegende DC-Spannung wird der Schalter der AC-seitigen Vorladeeinheit geschlossen, wodurch eine niederimpedante elektrische Verbindung des AC/DC-Wandlers und des AC-Netzes hergestellt wird. Nach erfolgter Aufladung der Ausgangskapazität erfolgt eine elektrische Verbindung der Versorgungseinheit mit dem Elektrolyseur über die DC-seitige Vorladeeinheit. Da der Elektrolyseur bei niedrigen Eingangsspannungen ein vorwiegend kapazitives Verhalten aufweist, welches erst nach Erreichen und Überschreiten einer kritischen DC-Spannung U_{DC,Cr} - oftmals auch als Leerlaufspannung bezeichnet - in ein ohmsches Verhalten übergeht, erfolgt auch hier die Verbindung zunächst über ein Schließen des Vorladeschalters bei zunächst geöffnetem Schalter der DC-seitigen Vorladeeinheit. Ein von der aufgeladenen Ausgangskapazität zu dem Elektrolyseur fließender Strom wird dabei über den Vorladewiderstand der DC-seitigen Vorladeeinheit geleitet und durch diesen in seiner Stromstärke begrenzt. Erst bei Erreichen eines weiteren Schwellwertes für eine an dem Elektrolyseur anliegende DC-Spannung, oder - was bei gleichbleibender DC-Spannung über der Ausgangskapazität gleichbedeutend ist - einem Unterschreiten eines Spannungsabfalls über dem Vorladewiderstand, wird der Schalter der DC-seitigen Vorladeeinheit geschlossen und der Elektrolyseur niederimpedant mit dem DC-Wandlerausgang des AC/DC-Wandlers verbunden.

Die Ausgangskapazität der Versorgungseinheit, wie auch der Elektrolyseur selbst weisen jeweils einen großen Kapazitätswert auf. Damit eine Vorladung der Kapazitäten nun innerhalb einer vorgegebenen Zeit abgeschlossen ist, sind für beide Vorladeeinheiten Vorladewiderstände mit einer hohen Nominalleistung erforderlich, was mit einem enormen Kostenaufwand verbunden ist. Wünschenswert ist daher ein Verfahren zum Aufstarten einer Elektrolyseanlage, welches mit einem geringeren Aufwand verbunden ist.

Die Druckschrift DE 10 2004 048 703 A1 offenbart eine Vorrichtung und ein Verfahren zum Starten und Betreiben einer mit einem Wechselstromnetz verbindbaren Brennstoffzellenanlage. Dabei ist ein bidirektionaler Wandler vorgesehen, über den bei einem Normalbetrieb ein von dem Brennstoffzellenstapel der Brennstoffzellenanlage erzeugter Gleichstrom zur Einspeisung in das Wechselstromnetz in Wechselstrom umgewandelt wird. Umgekehrt wird während eines Startvorgangs ein über das Wechselstromnetz zur Verfügung gestellter Wechselstrom der Brennstoffzellenanlage zur Einspeisung in einen Gleichstrom-Zwischenkreis umgewandelt.

### Aufgabe der Erfindung

Der Erfindung liegt die Aufgabe zugrunde, ein Verfahren zum Aufstarten einer Elektrolyseanlage anzugeben, das mit einem deutlich geringeren Aufwand umgesetzt werden kann. Konkret soll das Verfahrens ein Aufstarten der Elektrolyseanlage möglichst mit lediglich einer Vorladeeinheit, gegebenenfalls auch ohne Vorladeeinheit ermöglichen. Es ist zudem Aufgabe der Erfindung, eine zur Durchführung des Verfahrens geeignete Elektrolyseanlage aufzuzeigen.

### Lösung

Die Aufgabe wird bei einem Verfahren der eingangs genannten Art erfindungsgemäß mit den Merkmalen des unabhängigen Patentanspruchs 1 gelöst. Die Aufgabe, eine zur Durchführung des Verfahrens ausgelegte Elektrolyseanlage anzugeben, wird erfindungsgemäß mit den Merkmalen des unabhängigen Anspruchs 8 gelöst. Vorteilhafte Ausführungsformen des Verfahrens sind in den Ansprüchen 2 bis 7, vorteilhafte Ausführungsformen der Elektrolyseanlage in den Ansprüchen 9 bis 16 genannt.

### Beschreibung der Erfindung

Bei einem erfindungsgemäßen Verfahren zum Aufstarten einer Elektrolyseanlage umfasst die Elektrolyseanlage einen Elektrolyseur und eine als Gleichrichter operierende Versorgungseinheit. Dabei weist die Versorgungseinheit einen mit einem AC-Netz verbundenen AC-Anschluss, einen mit dem Elektrolyseur verbundenen DC-Anschluss und einen zwischen dem AC-Anschluss und dem DC-Anschluss angeordneten AC/DC-Wandler auf. Das Verfahren umfasst die **Schritte:**
- Aufladen einer mit einem DC-Wandleranschluss des AC/DC-Wandlers verbundenen Ausgangskapazität durch Betreiben des Elektrolyseurs in einem Revers-Betrieb als DC-Spannungsquelle, in einem mit dem Elektrolyseur verbundenen und von dem AC-Netz getrennten Zustand des AC/DC-Wandlers,
- Verbinden des AC/DC-Wandlers mit dem AC-Netz,
- Betriebsumkehr des Elektrolyseurs von dem Revers-Betrieb als DC-Spannungsquelle in einen Normal-Betrieb als DC-Last, und
- Betreiben des Elektrolyseurs in dem Normal-Betrieb als DC-Last mit einer über die Versorgungseinheit aus dem AC-Netz entnommenen und über den AC/DC-Wandler gleichgerichteten elektrischen Leistung.

Das Verbinden des AC/DC-Wandlers, insbesondere dessen AC-Wandlerausgangs mit dem AC-Netz, kann über ein Schließen einer AC-Trenneinheit erfolgen, die zwischen dem AC/DC-Wandler und dem AC-Ausgang angeordnet ist. Ähnlich kann das Trennen des AC/DC-Wandlers, insbesondere dessen DC-Wandlerausgangs und der daran angeschlossenen Ausgangskapazität von dem Elektrolyseur über ein Öffnen einer DC-Trenneinheit herbeigeführt werden, die zwischen der Ausgangskapazität und dem DC-Ausgang der Versorgungseinheit angeordnet ist. Grundsätzlich ist es möglich, dass das Verbinden des AC/DC-Wandlers mit dem AC-Netz zeitlich vor, gleichzeitig zu oder zeitlich nach dem Trennen des AC/DC-Wandlers von dem Elektrolyseur erfolgt. Die Aufladung der Ausgangskapazität kann zu einem Zeitpunkt, bei dem der AC-Wandlereingang mit dem AC-Netz verbunden wird, bereits vollständig abgeschlossen sein. Dies ist jedoch nicht notwendigerweise erforderlich. Vielmehr ist es im Rahmen der Erfindung auch möglich, dass die Ausgangskapazität auch dann noch über den im Revers-Betrieb arbeitenden Elektrolyseur aufgeladen wird, wenn der AC-Wandlereingang bereits mit dem AC-Netz galvanisch verbunden ist.

Das Verbinden des AC-Wandleranschlusses mit dem AC-Netz kann dabei weitgehend stromlos, zumindest jedoch deutlich stromreduziert erfolgen. Beispielsweise kann die Ausgangskapazität vor dem Verbinden des AC/DC-Wandlers mit dem AC-Netz bis auf einen Spannungs-Schwellwert aufgeladen sein, der zumindest in etwa einer Amplitude einer an dem AC-Eingang der Versorgungseinheit herrschenden Wechselspannung entspricht. Auf diese Weise liegen die Dioden der transistorbasierten Brückenschaltung des AC/DC-Wandlers in ihrem sperrenden Zustand vor und ein Stromstoß aus dem AC-Netz in die Ausgangskapazität wird weitestgehend unterdrückt.

Eine erfindungsgemäße Elektrolyseanlage beinhaltet eine einen Elektrolyseur umfassende Elektrolyseeinheit und eine den Elektrolyseur aus einem AC-Netz speisende Versorgungseinheit. Dabei umfasst die Versorgungseinheit einen AC-Anschluss zum Anschluss eines AC-Netzes, einen DC-Anschluss zum Anschluss des Elektrolyseurs und einen zwischen dem AC-Anschluss und dem DC-Anschluss angeordneten AC/DC-Wandler. Die Versorgungseinheit umfasst weiterhin eine AC-Trenneinheit zum Verbinden eines AC-Wandleranschlusses des AC/DC-Wandlers mit dem AC-Anschluss der Versorgungseinheit und eine DC-Trenneinheit zum Verbinden eines DC-Wandleranschlusses des AC/DC-Wandlers mit dem DC-Anschluss der Versorgungseinheit. Die erfindungsgemäße Elektrolyseanlage ist **dadurch gekennzeichnet, dass** sie zum Zweck ihrer Steuerung weiterhin eine Steuerungseinheit beinhaltet und zur Durchführung des erfindungsgemäßen Verfahrens ausgelegt und eingerichtet ist.

Der AC-Anschluss der Versorgungseinheit - wie auch der AC-Wandleranschluss des AC/DC-Wandlers - ist üblicherweise mehrphasig ausgebildet und beinhaltet mehrere Phasenleiteranschlüsse. Die Versorgungseinheit kann dazu ausgebildet sein, schieflastfähig zu operieren. In diesem Fall kann der AC-Anschluss beziehungsweise der AC-Wandleranschluss auch jeweils einen Neutralleiteranschluss aufweisen. Im Rahmen der Erfindung ist es jedoch auch möglich, dass es sich bei der Versorgungseinheit um eine nicht schieflastfähige Versorgungseinheit handelt. Bei einer mehrphasig ausgebildeten Versorgungseinheit, die nicht schieflastfähig ausgebildet ist, ist es möglich, dass der AC-Anschluss der Versorgungseinheit wie auch der AC-Wandleranschluss des AC/DC-Wandlers lediglich mehrere Phasenleiteranschlüsse, jedoch keinen Neutralleiteranschluss aufweisen. Im Rahmen der Erfindung ist es zudem möglich, dass die Versorgungseinheit lediglich einphasig ausgeführt ist und der AC Anschluss wie auch der AC-Wandleranschluss jeweils einen Phasenleiteranschluss und einen Neutralleiteranschluss umfasst.

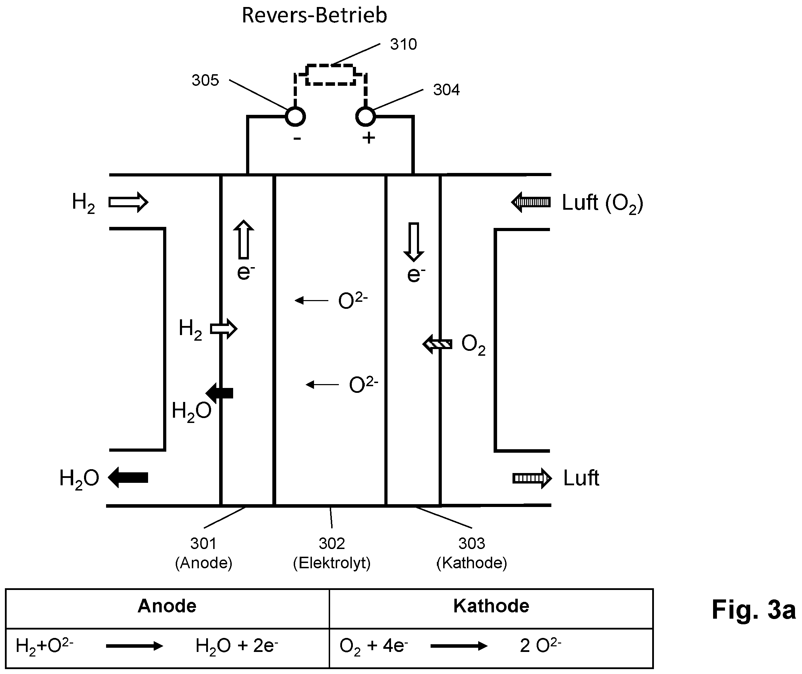

Die Erfindung nutzt den Effekt, dass bestimmte Typen von Elektrolyseuren zusätzlich zu ihrem Normal-Betrieb auch in einem sogenannten Revers-Betrieb operieren können. Bei dem Normal-Betrieb des Elektrolyseurs wird der Elektrolyseur als eine DC-Last betrieben, die ihrerseits eine eine DC-Spannung bereitstellende DC-Quelle als Energieversorgung benötigt. In dem Normal-Betrieb erfolgt die Elektrolysereaktion, bei der Wasser (H₂O) unter Verbrauch elektrischer Leistung in seine elementaren Bestandteile Wasserstoff (H₂) und Sauerstoff (O₂) zersetzt wird. Die elektrische Leistung wird über die Versorgungseinheit aus dem AC-Netz entnommen, gleichrichtet, und als gleichgerichtete elektrische Leistung dem Elektrolyseur zu dessen Versorgung zugeführt. Bei dem Revers-Betrieb hingegen operiert der Elektrolyseur selbst als DC-Quelle und stellt seinerseits eine elektrische Energie in Form einer DC-Spannung für eine andere DC-Last bereit. Elektrolyseure, die einen derartigen Revers-Betrieb aufweisen, sind beispielsweise Elektrolyseure mit Festoxid-Elektrolysezellen (*Solid-Oxide-Electrolysis-Cells, SOEC*), oder sogenannte Protonen-Austausch-Membran (*proton-exchange-membrane, PEM*) Elektrolyseure. Beide Betriebsmodi, Normal-Betrieb und Revers-Betrieb, wie auch ein Übergang beziehungsweise eine Betriebsumkehr vom Revers-Betrieb in den Normal-Betrieb werden am Beispiel eines Elektrolyseurs mit Festoxid-Elektrolysezellen in Verbindung mit den Fig. 3a bis 3b nochmals detailliert erläutert, weswegen an dieser Stelle auf die entsprechende Figurenbeschreibung verwiesen wird.

Indem nun der Elektrolyseur in seinem Revers-Betrieb operiert, kann im Rahmen der Erfindung das Aufladen der Ausgangskapazität der Versorgungseinheit nun nicht mittels einer dem AC-Netz entnommenen elektrischen Leistung, sondern mittels einer dem Elektrolyseur entnommenen elektrischen Leistung erfolgen. Dies gilt zumindest für einem anfänglichen Teil der Aufladung aus dem spannungslosen Zustand der Ausgangskapazität heraus, gegebenenfalls jedoch auch für die vollständige Aufladung der Ausgangskapazität. Für einen Leistungsfluss von dem Elektrolyseur in die Ausgangskapazität ist die Ausgangskapazität - zumindest anfänglich - lediglich mit dem Elektrolyseur galvanisch verbunden und - zusammen mit dem an die Ausgangskapazität angeschlossenen AC/DC-Wandler - vom AC-Netz galvanisch getrennt. Dabei kann die galvanische Trennung über die geöffnete AC-Trenneinheit zwischen dem AC-Eingang und dem AC/DC-Wandler herbeigeführt werden.

Ist die Ausgangskapazität hinreichend, gegebenenfalls auch vollständig aufgeladen, wird der Elektrolyseur von der Ausgangskapazität getrennt und der AC/DC-Wandler mit dem AC-Netz verbunden. Das Verbinden mit dem AC-Netz über das Schließen der AC-Trenneinheit kann dabei jedoch ohne einen Stromfluss, zumindest ohne einen nennenswerten Stromfluss aus dem AC-Netz in die Ausgangskapazität erfolgen. Nachdem der AC/DC-Wandler mit dem AC-Netz verbunden ist, kann ein Leistungsfluss aus dem AC-Netz in die Ausgangskapazität erfolgen. Komponenten der Versorgungseinheit, die aus der Ausgangskapazität versorgt werden und zuvor ihre Versorgungsleistung von dem im Revers-Betrieb operierenden Elektrolyseur erhielten, können nun aus dem AC-Netz versorgt werden. Derartige Komponenten, die aus der Ausgangskapazität versorgt werden, sind beispielsweise die Steuerungseinheit der Versorgungseinheit oder andere Kleinverbraucher, zum Beispiel Lüfter etc.

Die Betriebsumkehr des Elektrolyseurs von seinem Revers-Betrieb in seinen Normal-Betrieb ist üblicherweise stets mit einem mehr oder weniger ausgeprägtem Absinken der an dem Anschluss des Elektrolyseurs anliegenden DC-Spannung verbunden. In einer Ausführungsform des Verfahrens kann nun die Betriebsumkehr des Elektrolyseurs von seinem Revers-Betrieb in seinen Normal-Betrieb in einem Zustand erfolgen, bei dem sowohl der AC-Wandleranschluss des AC/DC-Wandlers mit dem AC-Netz als auch der DC-Wandleranschluss des AC/DC-Wandlers mit dem Elektrolyseur verbunden ist. Dabei können also sowohl die AC-Trenneinheit als auch die DC-Trenneinheit in ihren jeweils geschlossenen Zuständen vorliegen. Dies kann insbesondere dann durchgeführt werden, wenn absehbar ist, dass eine Verringerung einer DC-Spannung am Anschluss des Elektrolyseurs einen Gleichrichtwert des DC/AC-Wandlers nicht unterschreitet oder unterschreiten wird. Ein Unterschreiten des Gleichrichtwertes hätte nämlich einen unkontrollierbaren Stromfluss aus dem AC-Netz über Dioden des AC/DC-Wandlers zur Folge, der ein weiteres Absinken der DC-Spannung an der Ausgangskapazität verhindert. Dies wiederum kann die Betriebsumkehr des Elektrolyseurs von dem Revers-Betrieb in den Normal-Betrieb ungünstig beeinflussen, gegebenenfalls auch zusätzlich die Elektroden des Elektrolyseurs irreversibel schädigen. Wenn nun jedoch während der Betriebsumkehr trotz des temporären Einbruchs der an dem Anschluss des Elektrolyseurs anliegenden DC-Spannung der Gleichrichtwert des AC/DC-Wandlers nicht unterschritten wird, so liegen die Dioden des AC/DC-Wandlers in ihrem jeweils sperrenden Zustand vor und ein derartiger unkontrollierbarer Stromfluss aus dem AC-Netz über die Dioden des AC/DC-Wandlers kann schon aufgrund der Sperrwirkung der Dioden nicht erfolgen, insbesondere auch dann nicht, wenn der AC/DC-Wandler mit dem Elektrolyseur verbunden bleibt. Nach erfolgter Betriebsumkehr des Elektrolyseurs kann dann, wenn der Elektrolyseur in seinem Normal-Betrieb betrieben werden soll, eine Taktung des AC/DC-Wandlers so geändert werden, dass über diese die an der Ausgangskapazität anliegende DC-Spannung - und im galvanisch verbundenen Zustand von Ausgangskapazität und Anschluss des Elektrolyseurs ebenfalls die an dem Anschluss des Elektrolyseurs anliegende DC-Spannung - variiert und insbesondere angehoben wird.

Eine alternative Variante des Verfahrens kann dann angewendet werden, wenn absehbar ist, dass die Betriebsumkehr des Elektrolyseurs den Gleichrichtwert des AC/DC-Wandlers unterschreitet oder zu unterschreiten droht. Gemäß dieser alternativen Variante kann für die Betriebsumkehr, insbesondere vor oder auch während der Betriebsumkehr, ein Trennen des AC/DC-Wandlers von dem Elektrolyseur erfolgen. Die Betriebsumkehr des Elektrolyseurs von dem Revers-Betrieb in den Normal-Betrieb kann dann teilweise oder vollständig in einem von dem AC/DC-Wandler getrennten Zustand des Elektrolyseurs erfolgen. Nach erfolgter Betriebsumkehr kann der AC/DC-Wandlers mit dem Elektrolyseur wieder verbunden werden. In diesem Fall hat eine gegebenenfalls höhere DC-Spannung an der Ausgangskapazität aufgrund der Trennung von AC/DC-Wandler und Elektrolyseur keinen Einfluss auf die am Anschluss des Elektrolyseurs anliegende DC-Spannung und kann somit weder die Betriebsumkehr des Elektrolyseurs ungünstig beeinflussen, noch die Elektroden des Elektrolyseurs schädigen.

Die Betriebsumkehr des Elektrolyseurs von seinem Revers-Betrieb in seinen Normal-Betrieb kann über eine Änderung von Ausgangsstoffen (Edukten) erfolgen, die den Elektroden (Anode und Kathode) der Elektrolysezellen zugeführt werden. Nach erfolgter Betriebsumkehr weisen die Elektrolysezellen des Elektrolyseurs eine Leerlaufspannung auf, die abhängig von der Anzahl der in Reihe geschalteten Elektrolysezellen ist und typischerweise in einem Bereich von 0,8V - 1,2V pro Zelle liegt. Eine Elektrolyse findet jedoch noch nicht statt, da der Elektrolyseur bei geöffnet vorliegender DC-Trenneinheit noch von dem DC-Wandleranschluss des AC/DC-Wandler und somit von der die Elektrolysereaktion antreibenden elektrischen Leistungsversorgung getrennt ist. Um den Normal-Betrieb des Elektrolyseurs herbeizuführen, wird der Elektrolyseur schließlich galvanisch mit dem DC-Wandlerausgang und der daran angeschlossenen Ausgangskapazität verbunden. Dabei kann zuvor eine Angleichung der Leerlaufspannung des Elektrolyseurs an die DC-Spannung erfolgen, die an der Ausgangskapazität der Versorgungseinheit anliegt, um einen ansonsten fließenden Ausgleichsstrom zu reduzieren. Dies kann bei dem Elektrolyseur beispielsweise über eine Änderung der Zusammensetzung der an die Elektroden gelieferten Edukte erfolgen. Nach erfolgter Verbindung des Elektrolyseurs mit der Versorgungseinheit wird der Elektrolyseur im Normal-Betrieb betrieben und die Elektrolysereaktion des Elektrolyseurs wird durch eine an dem Elektrolyseur anliegende und von der Versorgungseinheit erzeugte DC-Spannung in an sich bekannter Weise gesteuert.

Da die Aufladung der Ausgangskapazität weitestgehend über den Elektrolyseur und nicht aus dem AC-Netz erfolgt, kann auf eine AC-seitige Vorladeeinheit mit einem entsprechenden Vorladewiderstand innerhalb der AC-Trenneinheit verzichtet werden. Sollte dennoch eine AC-seitige Vorladeeinheit weiterhin gewünscht sein, kann sie jedoch in Bezug auf ihre Stromtragfähigkeit einfach und kostengünstig ausgelegt werden. Beispielsweise kann eine Nominalleistung eines AC-seitigen Vorladewiderstandes deutlich reduziert werden. In bestimmten Fällen ist es sogar möglich, zusätzlich auch auf eine DC-seitige Vorladeeinheit mit einem entsprechenden Vorladewiderstand zu verzichten. Insgesamt kann der Aufwand für die Versorgungseinheit, wie auch für die Elektrolyseanlage mit der Versorgungseinheit minimiert werden.

Gemäß einer vorteilhaften Ausführungsform des Verfahrens kann die Ausgangskapazität auf eine DC-Spannung U_{DC,4} aufgeladen werden, deren Wert zumindest einem Gleichrichtwert oder zumindest einer einfachen Amplitude der an dem AC-Anschluss anliegenden Wechselspannung (AC-Spannung) U_{AC} entspricht. Bei der AC-Spannung kann es sich je nach Art des AC-Anschlusses um eine Differenzspannung der Phasenleiter des AC-Netzes oder um eine Spannung zwischen jedem Phasenleiter und dem Neutralleiter handeln. Ersteres ist dann der Fall, wenn der AC-Anschluss der Versorgungseinheit wie auch der AC-Wandleranschluss lediglich Phasenleiteranschlüsse, aber keinen Neutralleiteranschluss aufweist. Letzteres ist dann der Fall, wenn der AC-Anschluss wie auch der AC-Wandleranschluss neben den Phasenleiteranschlüssen auch einen Neutralleiteranschluss aufweist. Unabhängig von der Art des AC-Anschlusses gewährleistet eine derartige Aufladung der Ausgangskapazität, dass die Dioden des AC/DC-Wandlers in ihrem sperrenden Zustand vorliegen oder rasch in diesen überführt werden. Konkret kann beispielsweise ein LC-Filter zwischen der AC-Trenneinheit und dem AC-Wandlerausgang angeordnet sein, dessen Kondensatoren noch ungeladen sind und sich bei dem Schließen der AC-Trenneinheit aufladen. Da jedoch eine Kapazität der Filterkondensatoren typischerweise deutlich geringer als die der Ausgangskapazität ist, fällt der fließende Ausgleichsstrom für die Filterkondensatoren ebenfalls so gering aus, dass er auch ohne zusätzliche strombegrenzende Mittel tolerierbar ist. Insgesamt kann ein Leistungsfluss aus dem AC-Netz bei einem Schließen der AC-Trenneinheit deutlich reduziert werden.

In einer weiteren Variante kann die Ausgangskapazität auf eine DC-Spannung U_{DC,4} aufgeladen werden, deren Wert zumindest einer doppelten Amplitude der an dem AC-Anschluss anliegenden AC-Spannung U_{AC} entspricht. Auch hier kann es sich, je nach Ausführung des AC-Anschlusses um eine Differenzspannung zweier Phasenleiter oder eine Spannung eines der Phasenleiter relativ zu dem Neutralleiter handeln. Bei einer derartigen DC-Spannung der Ausgangskapazität kann vor dem Verbinden des AC/DC-Wandlers mit dem AC-Netz eine AC-Spannung von dem AC/DC-Wandler generiert und mit einer an dem AC-Anschluss der Versorgungseinheit anliegenden AC-Spannung U₁₁ synchronisiert werden. Das Generieren der AC-Spannung kann über ein entsprechendes Takten der Transistoren des AC/DC-Wandlers erfolgen. Dies ist insbesondere dann vorteilhaft, wenn zwischen AC-Trenneinheit und AC/DC-Wandler ein passives Filter, beispielsweise ein LC-Filter oder ein LCL-Filter angeordnet ist. Auf diese Weise können nämlich Filterkondensatoren des passiven Filters seitens des AC/DC-Wandlers schon vor dem Schließen der AC-Trenneinheit in kontrollierter Art und Weise aufgeladen werden. Das Verbinden des AC/DC-Wandlers mit dem AC-Netz durch Schließen der AC-Trenneinheit kann somit nahezu leistungsbeziehungsweise stromlos erfolgen.

Während der Erzeugung der AC-Spannung durch den AC/DC-Wander zum Zweck der Synchronisation wird Verlustleistung durch den AC/DC-Wandler erzeugt, die - sofern die AC-Trenneinheit noch geöffnet ist - der Ausgangskapazität entnommen wird. Wäre auch die DC-Trenneinheit geöffnet, würde daher die an der Ausgangskapazität anliegende DC-Spannung absinken. In einer vorteilhaften Variante des Verfahrens ist es möglich, dass das Trennen des AC/DC-Wandlers von dem Elektrolyseur erst dann erfolgt, wenn der AC/DC-Wandler mit dem AC-Netz verbunden ist, also die AC-Trenneinheit geschlossen ist. Auf diese Weise wird eine Wiederaufladung der Ausgangskapazität und somit eine Kompensation der durch den AC/DC-Wandler erzeugten Verlustleistung über den im Revers-Betrieb operierenden Elektrolyseur ermöglicht. Somit ist während der Synchronisation und auch bis zur erfolgten Synchronisation eine unterbrechungsfreie Versorgung des AC/DC-Wandlers einerseits und auch von weiteren gegebenenfalls über die Ausgangskapazität elektrisch versorgten Komponenten der Versorgungseinheit sicher gewährleistet.

Nach Schließen der AC-Trenneinheit und der dann existierenden elektrischen Verbindung mit dem AC-Netz kann ein Leistungsfluss in die Ausgangskapazität sowie eine elektrische Versorgung der daran angeschlossenen Komponenten aus dem AC-Netz erfolgen. Danach kann die DC-Trenneinheit dann geöffnet werden und der Elektrolyseur kann durch die Betriebsumkehr von dem Revers-Betrieb in den Normal-Betrieb versetzt werden.

Gemäß einer Ausführungsform kann der Elektrolyseur in einem zumindest weitgehend spannungsfreien Zustand seines Anschlusses - also bei ungefähr 0V und schon vor dem Versetzen des Elektrolyseurs in den Revers-Betrieb - mit der Ausgangskapazität der Versorgungseinheit verbunden werden und in einem mit der Versorgungseinheit verbundenen Zustand in seinen Revers-Betrieb versetzt werden. Da die Versorgungseinheit vor dem Aufstarten der Elektrolyseanlage üblicherweise sowohl eine geöffnete AC-Trenneinheit als auch eine geöffnete DC-Trenneinheit aufweist, ist auch die Ausgangskapazität anfangs spannungsfrei. Daher herrscht kein, zumindest jedoch ein lediglich vernachlässigbarer Spannungsunterschied zwischen den DC-Spannungen, die an dem Anschluss des Elektrolyseurs und der Ausgangskapazität anliegen. Somit erzeugt die Verbindung zwischen beiden auch keinen, gegebenenfalls nur einen vernachlässigbaren Ausgleichsstrom. Zur Durchführung der Betriebsumkehr kann der Elektrolyseur dann von der aufgeladenen Ausgangskapazität getrennt werden. Dies ist zwar nicht zwingend erforderlich, aber insbesondere dann vorteilhaft, wenn mit der Betriebsumkehr in den Normalbetrieb eine signifikante Absenkung der an dem Anschluss des Elektrolyseurs anliegenden DC-Spannung verbunden ist, so dass diese einen Gleichrichtwert des mit dem AC-Netz verbundenen AC/DC-Wandlers unterschreitet. Unterschreitet nämlich die DC-Spannung an dem Anschluss des Elektrolyseurs den Gleichrichtwert des AC/DC-Wandlers, so hätte dies bei geschlossenem Zustand der DC-Trenneinheit und geschlossenem Zustand der AC-Trenneinheit einen Stromfluss aus dem AC-Netz zur Folge, welcher die Durchführung der Betriebsumkehr ungünstig beeinflussen und gegebenenfalls die Elektroden des Elektrolyseurs schädigen kann. Nach erfolgter Betriebsumkehr liegt der Elektrolyseur in einem für seinem Normal-Betrieb vorbereiteten Zustand vor. Da er jedoch zunächst, zumindest in einer Ausführungsform, durch die geöffnete DC-Trenneinheit noch von dem AC/DC-Wandler getrennt ist, liegt an seinem Anschluss die Leerlaufspannung an. In Abhängigkeit der zugeführten Medien, insbesondere in Abhängigkeit von deren Partialdruck und deren Temperatur, gegebenenfalls auch von einer Temperatur der Elektrolysezellen, lässt sich die Leerlaufspannung des Elektrolyseurs jedoch in gewissen Grenzen variieren. Somit kann die DC-Spannung an dem Anschluss des Elektrolyseurs der an der Ausgangskapazität anliegenden DC-Spannung angeglichen werden, weswegen in bestimmten Fällen zusätzlich auch auf eine DC-seitige Vorladeeinheit verzichtet werden kann. Ist hingegen absehbar, dass die DC-Spannung am Anschluss des Elektrolyseurs bei der Betriebsumkehr von dem Revers-Betrieb zu dem Normal-Betrieb den Gleichrichtwert des mit dem AC-Netz verbundenen AC/DC-Wandlers nicht unterschreitet, so kann die Betriebsumkehr auch in einem Zustand erfolgen, bei dem die DC-Trenneinheit geschlossen ist und somit der DC-Wandleranschluss und die Ausgangskapazität mit dem Anschluss des Elektrolyseurs verbunden sind.

Gemäß einer weiteren Variante des Verfahrens kann jedoch nach erfolgter Betriebsumkehr des Elektrolyseurs und vor dem Schließen der DC-Trenneinheit noch ein signifikanter Spannungsunterschied zwischen dem Anschluss des Elektrolyseurs und der Ausgangskapazität herrschen. Konkret kann beispielsweise der Elektrolyseur in einem von der Ausgangskapazität getrennten Zustand in seinen Revers-Betrieb versetzt worden sein, und die Ausgangskapazität noch weitgehend spannungsfrei vorliegen. Alternativ oder kumulativ ist es auch möglich, dass der Elektrolyseur zwar in einem mit der Ausgangskapazität verbundenen Zustand in den Revers-Betrieb versetzt wurde, aber ein Angleichen der DC-Spannungen zwischen dem Anschluss des Elektrolyseurs und der Ausgangskapazität nach erfolgter Betriebsumkehr nicht hinreichend möglich ist. Konkret kann also eine von 0V verschiedene DC-Spannung an dem Anschluss des Elektrolyseurs anliegen, die insbesondere nahe einer für seinen Leerlaufbetrieb charakteristischen Leerlaufspannung liegt (U_{DC,EI} > 0V), während die Ausgangskapazität aufgeladen (U_{DC,4} > 0) oder weitgehend spannungsfrei (U_{DC,4} ≈ 0V) vorliegen kann. In derartigen Fällen, und insbesondere wenn ein Unterschied der charakteristischen Leerlaufspannung des Elektrolyseurs U_{DC,EL} und der an der Ausgangskapazität anliegenden DC-Spannung einen Schwellwert übersteigt, kann der Anschluss des Elektrolyseurs über einen strombegrenzenden Vorladewiderstand mit der Ausgangskapazität verbunden werden. Hierzu kann bei der Elektrolyseanlage die DC-Trenneinheit der Versorgungseinheit eine Serienschaltung aus einem Vorladewiderstand und einem Vorladeschalter, sowie einen parallel zu der Serienschaltung angeordneten Schalter aufweisen. Alternativ dazu ist es möglich, dass der Anschluss des Elektrolyseurs bei einer an ihm anliegenden von 0V verschiedenen DC-Spannung über einen Gleichspannungswandler mit der Ausgangskapazität verbunden wird. Um letzteres zu realisieren, kann die Elektrolyseanlage, insbesondere die DC-Trenneinheit der Versorgungseinheit einen Gleichspannungswandler aufweisen, der ausgebildet ist, eine an dem Anschluss des Elektrolyseurs herrschende DC-Spannung in Richtung der Ausgangskapazität tiefzusetzen. In beiden Ausführungsformen (Vorladewiderstand oder Gleichspannungswandler) wird ein entstehender Ausgleichsstrom von dem Elektrolyseur in die ungeladene, oder noch nicht ausreichend aufgeladene Ausgangskapazität sicher auf einen für die betroffenen Bauteile unkritischen Wert begrenzt.

Gemäß einer Ausführungsform der Elektrolyseanlage kann die Versorgungseinheit Spannungssensoren aufweisen. Die Spannungssensoren können zur Detektion einer über die AC-Trenneinheit abfallenden AC-Spannung und/oder einer über die DC-Trenneinheit abfallenden DC-Spannung ausgelegt sein. Es ist möglich, dass die Spannungssensoren direkt die über die jeweilige Trenneinheit abfallende Spannung detektieren. Alternativ ist es auch möglich, dass auf jeder Kontaktseite der Trenneinheiten jeweils eine Spannungsmessung relativ zu einem Bezugspotential erfolgt und danach die Spannungen voneinander subtrahiert werden. Die Spannungssensoren können mit der Steuerungseinheit der Elektrolyseanlage, der Steuerungseinheit der Versorgungseinheit und/oder der Steuerungseinheit der Elektrolyseeinheit derart zusammenwirken, dass ein Schließen der DC-Trenneinheit abhängig von der detektierten DC-Spannung erfolgt. Ähnlich kann auch ein Schließen der AC-Trenneinheit abhängig von der detektierten AC-Spannung erfolgen.

In einer Ausführungsform der Elektrolyseanlage kann deren Steuerungseinheit als separate und zentrale Steuerungseinheit ausgebildet sein, die sowohl zur Steuerung der Versorgungseinheit als auch zur Steuerung der Elektrolyseeinheit ausgelegt ist. Alternativ dazu ist es möglich, dass die Steuerungseinheit der Elektrolyseanlage zumindest teilweise, gegebenenfalls auch vollumfänglich in eine ohnehin vorhandene Steuerungseinheit der Versorgungseinheit und/oder eine Steuerungseinheit der Elektrolyseeinheit integriert ist. Dabei können sämtliche Steuerungseinheiten (die der Versorgungseinheit, die der Elektrolyseeinheit und gegebenenfalls die der Elektrolyseanlage) steuerungstechnisch und kommunikativ miteinander verbunden sein.

In einer Ausführungsform der Elektrolyseanlage kann der AC/DC-Wandler der Versorgungseinheit für einen bidirektionalen Leistungsfluss ausgelegt sein, der in beide Richtungen elektrische Wirkleistung mit dem AC-Netz austauschen kann. Zudem kann er ausgelegt sein, kapazitive Blindleistung, wie auch induktive Blindleistung mit dem AC-Netz auszutauschen. Der AC/DC-Wandler kann eine transistorbasierte Brückenschaltung, also eine Brückenschaltung mit mehreren Transistoren mit jeweils einer antiparallel dazu geschalteten Diode aufweisen. Es ist möglich, dass die Versorgungseinheit Mittel zur Störstromdämpfung aufweist. Beispielsweise kann die Versorgungseinheit ein passives Filter mit Induktivitäten und Filterkapazitäten zur Filterung taktfrequenter Störströme umfassen. Bei dem Filter kann es sich insbesondere um ein LC-Filter oder ein LCL-Filter handeln.

Um als Elektrolyseur innerhalb der Elektrolyseanlage eingesetzt werden zu können, muss er bestimmte Eigenschaften aufweisen. Konkret muss er einerseits ausgebildet sein, in einem Normal-Betrieb zu operieren, bei der eine Elektrolysereaktion, insbesondere eine Elektrolysereaktion von Wasser in Wasserstoff und Sauerstoff erfolgt. Zudem muss der Elektrolyseur ausgelegt sein, in einem Revers-Betrieb elektrische Energie aus einem chemischen Energieträger bereitzustellen und somit als DC-Quelle zu operieren. Elektrolyseurtypen, die diese Betriebsmodi realisieren, sind beispielsweise auf Festoxid-Elektrolysezellen basierende Elektrolyseure (SOEC-Elektrolyseur) oder Protonen-Austausch-Membran Elektrolyseure (PEM-Elektrolyseur). Daher kann der Elektrolyseur der Elektrolyseanlage vorteilhafterweise als ein Elektrolyseur mit Festoxid-Elektrolysezellen, also als ein Festoxid-Elektrolyseur, ausgebildet sein. Alternativ ist es auch möglich, dass der Elektrolyseur als ein Protonen-Austausch-Membran Elektrolyseur (PEM-Elektrolyseur) ausgebildet ist.

### Kurzbeschreibung der Figuren

Im Folgenden wird die Erfindung mithilfe von Figuren dargestellt. Von diesen zeigen
- **Fig. 1**: eine Ausführungsform einer erfindungsgemäßen Elektrolyseanlage;
- **Fig. 2**: ein Ablaufdiagramm einer Ausführungsform des erfindungsgemäßen Verfahrens, wie es mit der Elektrolyseanlage aus Fig. 1 durchgeführt werden kann;
- **Fig. 3a**: eine schematische Darstellung des Revers-Betriebs am Beispiel einer Festoxid-Elektrolysezelle (SOEC);
- **Fig. 3b**: eine schematische Darstellung des Normal-Betriebs am Beispiel der Festoxid-Elektrolysezelle (SOEC) aus Fig. 3a

### Figurenbeschreibung

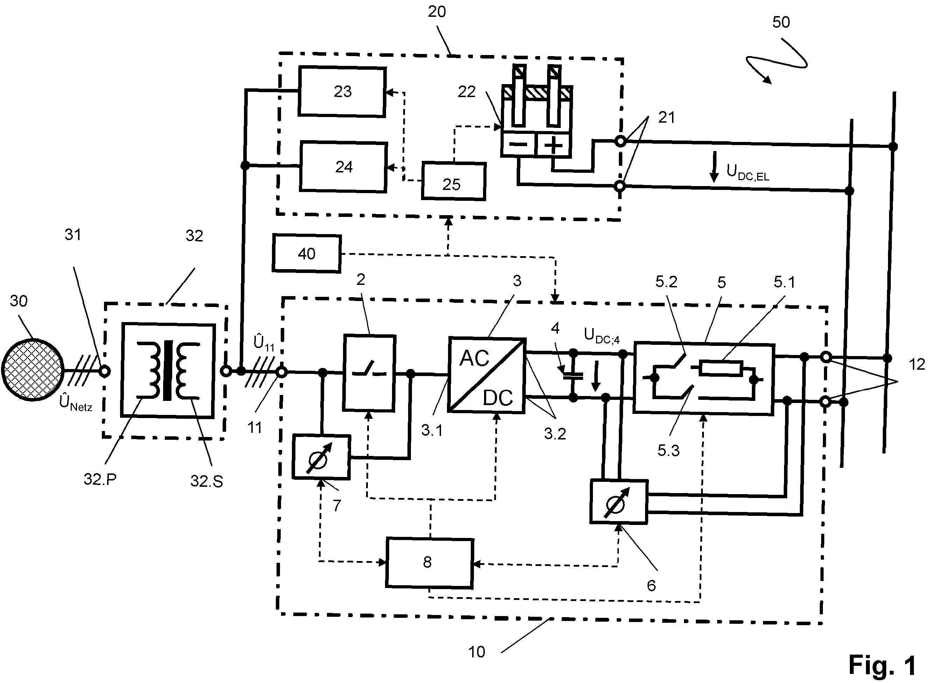

In **Fig. 1** ist eine Ausführungsform einer erfindungsgemäßen Elektrolyseanlage 50 dargestellt. Die Elektrolyseanlage 50 beinhaltet eine Elektrolyseeinheit 20, eine Versorgungseinheit 10 und eine separate Steuerungseinheit 40, die zur koordinierten Steuerung der Elektrolyseeinheit 20 und der Versorgungseinheit 10 ausgelegt ist. Zu diesem Zweck ist die Steuerungseinheit 40 steuerungstechnisch mit der Elektrolyseeinheit 20 und der Versorgungseinheit 10, insbesondere mit deren Steuerungseinheiten 8, 25 verbunden. Die Versorgungseinheit 10 ist mit ihrem AC-Anschluss 11 über einen Transformator 32 und einen Netzanschlusspunkt 31 an ein AC-Netz 30 angeschlossen. Beispielhaft handelt es sich bei dem AC-Netz 30 um ein dreiphasig ausgebildetes Mittelspannungsnetz, das eine Wechselspannung mit der Amplitude Û_{Netz} an einer Primärseite 32.P des Transformators 32 bereitstellt. Der Transformator 32 wandelt die primärseitig anliegende Wechselspannung in eine dreiphasige Wechselspannung mit der Amplitude Û₁₁ um, die an einer Sekundärseite 32.S des Transformators 32 und an dem AC-Anschluss 11 der Versorgungseinheit 10 anliegt.

Zwischen dem AC-Anschluss 11 und dem DC-Anschluss 12 der Versorgungseinheit 10 ist in Richtung von dem AC-Anschluss 11 zu dem DC-Anschluss 12 eine AC-Trenneinheit 2, ein AC/DC-Wandler 3 mit einem AC-Wandleranschluss 3.1 und einem DC-Wandleranschluss 3.2, eine Ausgangskapazität 4 und eine DC-Trenneinheit 5 angeordnet. Die DC-Trenneinheit 5 umfasst einen Vorladepfad mit einer Serienschaltung aus einem Vorladewiderstand 5.1 und einem Vorladeschalter 5.2. Parallel zu der Serienschaltung aus Vorladewiderstand 5.1 und Vorlageschalter 5.2 ist ein weiterer Schalter 5.3 angeordnet. Alternativ dazu ist es jedoch auch möglich, dass die DC-Trenneinheit 5 einen Gleichspannungswandler umfasst. Die Versorgungseinheit 10 umfasst einen ersten Spannungssensor 6, der ausgelegt ist, eine über der DC-Trenneinheit 5 abfallende DC-Spannung zu detektieren. Sie umfasst ferner einen zweiten Spannungssensor 7 zur Detektion einer über der AC-Trenneinheit 2 abfallenden AC-Spannung. Beide Spannungssensoren 6, 7 sind mit der Steuerungseinheit 8 der Versorgungseinheit 10 verbunden. Die Steuerungseinheit 8 der Versorgungseinheit 10 ist steuerungstechnisch mit der AC-Trenneinheit 2 und der DC-Trenneinheit 5 verbunden. Die steuerungstechnischen Verbindungen sind in Fig. 1 über gestrichelt dargestellte Linien symbolisiert. Die Steuerungseinheit 8 ist ausgelegt, die AC-Trenneinheit 2 und die DC-Trenneinheit 5 in Abhängigkeit der über die Spannungssensoren 6,7 detektierten Spannungen zu steuern. Sie ist weiterhin zudem ausgelegt, den AC/DC-Wandler 3 zu steuern. Der AC/DC-Wandler 3 weist eine transistorbasierte Brückenschaltung auf und ist in Bezug auf eine Richtung des Leistungsflusses bidirektional betreibbar. Konkret ist er ausgelegt, einerseits als Gleichrichter zu operieren und dabei eine an seinem AC-Wandleranschluss 3.1 anliegende AC-Spannung in eine an seinem DC-Wandleranschluss 3.2 und der damit verbundenen Ausgangskapazität 4 anliegende DC-Spannung U_{DC,4} zu wandeln. Andererseits ist er ausgelegt, als Wechselrichter zu operieren und dabei eine an der Ausgangskapazität 4 und an seinem DC-Wandleranschluss 3.2 anliegende DC-Spannung U_{DC,4} in eine an seinem AC-Wandleranschluss 3.1 anliegende AC-Spannung zu wandeln. Er ist zudem in der Lage, kapazitive und induktive Blindleistung mit dem AC-Netz 30 auszutauschen.

Die Elektrolyseeinheit 20 beinhaltet einen Elektrolyseur 22, Hilfseinrichtungen zum Betreiben des Elektrolyseurs 23, 24, und eine Steuerungseinheit 25 zur Steuerung der Hilfseinrichtungen und gegebenenfalls des Elektrolyseurs 22. Die Hilfseinrichtungen können derart gesteuert werden, dass während jedes Betriebszustandes des Elektrolyseurs 22 (insbesondere während des Revers-Betrieb, der Betriebsumkehr und des Normal-Betriebs) die jeweils benötigten Medien und Umgebungsbedingungen zum Ablauf der elektrochemischen Reaktion innerhalb der Elektrolyseeinheit 20 verfügbar sind bzw. vorliegen. In Fig. 1 ist der Elektrolyseur 22 exemplarisch als ein auf Festoxid-Elektrolysezellen basierter Elektrolyseur (SOEC-Elektrolyseur) mit Festoxid-Elektrolysezellen (SOEC) dargestellt. Als Hilfseinrichtungen des SOEC-Elektrolyseurs sind in Fig. 1 exemplarisch eine Gasversorgungseinrichtung 23 zur Zufuhr und/oder Abfuhr der für die chemische Reaktion erforderlichen Medien (Edukte und Produkte), sowie eine Heizeinrichtung 23 zum Aufheizen der Elektrolysezellen des Elektrolyseurs 22 und/oder der zugeführten Medien illustriert. Dabei werden die Gasversorgungseinrichtung 23 und die Heizeinrichtung 24 über die sekundärseitig von dem Transformator 32 erzeugte AC-Spannung der Amplitude Û₁₁ versorgt, die auch an dem AC-Anschluss 11 der Versorgungseinheit 10 anliegt. Die Elektrolyseeinheit 20 bzw. der Elektrolyseur 22 ist elektrisch über einen Anschluss 21 mit dem DC-Anschluss 12 der Versorgungseinheit 10 verbunden.

Die Elektrolyseanlage 50 kann weitere, in Fig. 1 nicht explitzit dargestellte und gegebenenfalls für eine Erläuterung der vorliegenden Erfindung nicht notwendige Komponenten beinhalten. Beispielsweise kann die Versorgungseinheit 10 ein Filter zur Dämpfung unerwünschter Störströme in das AC-Netz 30 beinhalten. Dabei kann das Filter Induktivitäten und damit verbundene Filterkapazitäten aufweisen und zum Beispiel zwischen der AC-Trenneinheit 2 und dem AC/DC-Wandler 3 angeordnet sein. Auch wenn die Versorgungseinheit 10 in Fig. 1 exemplarisch als dreiphasige Versorgungseinheit ausgebildet ist, kann sie auch eine andere Anzahl von Phasenleitern bzw. Phasenleiteranschlüssen aufweisen. Dabei ist es auch möglich, dass sie als einphasige Versorgungseinheit ausgelegt ist. Bei dem AC-Netz 30 muss es sich nicht zwingend um eine Mittelspannungsnetz handeln. Vielmehr ist es auch möglich, dass das AC-Netz 30 einem Niederspannungsnetz entspricht. In einem derartigen Fall kann auch der Transformator 32 entfallen und die Versorgungseinheit 10 direkt mit dem AC-Netz 30 verbunden sein.

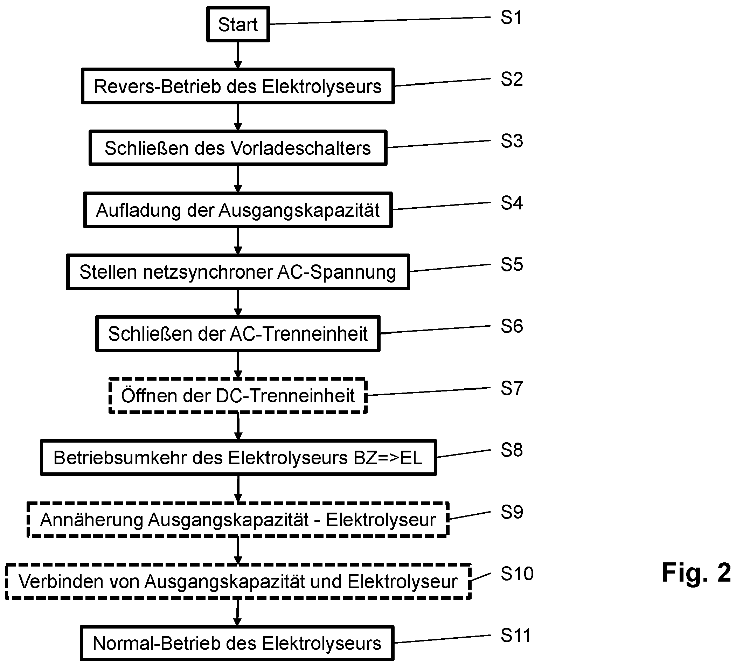

In **Fig. 2** ist eine Ausführungsform des Verfahrens zum Betrieb der Elektrolyseanlage, beispielsweise der Elektrolyseanlage 50 aus Fig. 1, in Form eines Flussdiagramms schematisch illustriert. Das Verfahren startet mit einem Schritt S1. Dabei ist zunächst der AC-Wandleranschluss 3.1 des AC/DC-Wandlers 3 über die geöffnete AC-Trenneinheit 2 von dem AC-Anschluss 11 der Versorgungseinheit 10 - und somit von dem AC-Netz 30 - getrennt. Auch der DC-Wandleranschluss 3.2 und die Ausgangskapazität 4 sind vom DC-Anschluss 12 der Versorgungseinheit 10 und damit von dem Anschluss 21 des Elektrolyseurs 22 über die geöffnete DC-Trenneinheit 5 getrennt (sowohl Vorladeschalter 5.2, als auch weiterer Schalter 5.3 sind geöffnet). In einem zweiten Schritt S2 wird der Elektrolyseur 22 über die Steuerungseinheit der Elektrolyseanlage 40, sowie die damit verbundene Steuerungseinheit der Elektrolyseeinheit 25 in seinen Revers-Betrieb versetzt. Bei dem Revers-Betrieb operiert der Elektrolyseur 22 unter Zufuhr geeigneter Medien als Brennstoffzelle und damit als DC-Quelle. Dabei werden die Elektrolysezellen, gegebenenfalls auch die zugeführten Medien, über die Heizeinrichtung 24 erwärmt und die Medien den Elektrolysezellen des Elektrolyseurs 22 über die Gasversorgungseinrichtung 23 zugeführt. Dies ist möglich, da die Hilfseinrichtungen, hier: die Gasversorgungseinrichtung 23 und die Heizeinrichtung 24, über die an der Sekundärseite des Transformator 32.S anliegende AC-Spannung versorgt werden. In dem Revers-Betrieb wird an dem Anschluss 21 des Elektrolyseurs 22 eine DC-Spannung generiert, die auch an dem DC-Anschluss 12 der Versorgungseinheit 10 anliegt. In einem dritten Schritt S3 wird der Vorladeschalter 5.2 der DC-Trenneinheit 5 geschlossen, wodurch in einem vierten Schritt S4 die Ausgangskapazität 4 über einen durch den Vorladewiderstand 5.1 begrenzten Strom aufgeladen wird. Die Aufladung der Ausgangskapazität 4 erfolgt hier zumindest auf einen Wert, der der doppelten Amplitude Û₁₁ der an dem AC-Anschluss 11 anliegenden AC-Spannung beträgt. Dabei kann bei Unterschreiten eines Schwellwertes der über die DC-Trenneinheit 5 abfallenden DC-Spannung der weitere Schalter 5.3 der DC-Trenneinheit 5 geschlossen und der Elektrolyseur 22 niederohmig mit dem DC-Wandleranschluss 3.2 und der Ausgangskapazität 4 verbunden werden. In einem fünften Schritt S5 wird über eine entsprechende Taktung des AC/DC-Wandlers 3, die von der Steuerungseinheit 8 gesteuert wird, eine AC-Spannung mit einer Amplitude erzeugt, die zumindest näherungsweise der Amplitude Û₁₁ entspricht. Weiterhin wird die von dem AC/DC-Wandler 3 generierte AC-Spannung sowohl hinsichtlich ihrer Amplitude als auch hinsichtlich ihrer Phasenlage mit der an dem AC-Anschluss 11 anliegenden AC-Spannung synchronisiert. Ein Verlauf der Synchronisation kann dabei mittels des ersten Spannungssensors 7 beobachtet werden, der die an beiden Anschlüssen der AC-Trenneinheit 2 anliegenden AC-Spannungen detektiert und diese der Steuerungseinheit 8 übergibt. Während des Verlaufs der Synchronisation ist die DC-Trenneinheit 5 geschlossen, so dass eine Verlustleistung des AC/DC-Wandlers 3, die der Ausgangskapazität 4 entnommen wird, seitens des in dem Revers-Betrieb operierenden Elektrolyseurs nachfließen und somit kompensiert werden kann. Die an der Ausgangskapazität 4 anliegende DC-Spannung U_{DC,4} kann somit konstant gehalten werden. Bei hinreichender Synchronisation wird in einem sechsten Schritt S6 die AC-Trenneinheit 2 geschlossen, was aufgrund der Synchronisation nahezu stromlos und somit schonend für die AC-Trenneinheit 2 erfolgen kann. Da bei geschlossener AC-Trenneinheit 2 eine Wiederaufladung der Ausgangskapazität 4 aus dem AC Netz 30 gewährleistet ist, kann in einem siebten Schritt S7 die DC-Trenneinheit 5 (hier: Vorladeschalter 5.2 und weiterer Schalter 5.3) geöffnet werden, wodurch der Elektrolyseur 22 von dem DC-Wandleranschluss 3.2 und der Ausgangskapazität 4 galvanisch getrennt wird. Der siebte Schritt S7 ist ein lediglich optionaler Schritt, was in Fig. 2 über eine gestrichelt dargestellte Umrahmung symbolisiert ist. Er ist insbesondere dann vorteilhaft, wenn absehbar ist, dass mit der Betriebsumkehr eine signifikante Verringerung der an dem Anschluss des Elektrolyseurs 22 anliegenden DC-Spannung U_{DC,EL} verbunden ist, so dass diese unter einen Gleichrichtwert des mit dem AC-Netz 30 verbundenen AC/DC-Wandlers 3 fallen kann. In einem achten Schritt S8 erfolgt eine Betriebsumkehr des Elektrolyseurs 22, die über die zentrale Steuerungseinheit 40 der Elektrolyseanlage 50 in Verbindung mit der Steuerungseinheit 25 der Elektrolyseeinheit 20 gesteuert wird. Die Betriebsumkehr des Elektrolyseurs 22 von seinem Revers-Betrieb als Brennstoffzelle BZ zu seinem Normal-Betrieb als Elektrolyseur EL kann in einem Zustand erfolgen, bei dem der Elektrolyseur 22 von dem DC-Wandleranschluss 3.2 und der Ausgangskapazität 4 galvanisch getrennt ist. Bei geöffneter DC-Trenneinheit 5 kann in einem optionalen neunten Schritt S9 eine sich an dem Anschluss 21 des Elektrolyseurs 22 ausbildende Leerlaufspannung als DC-Spannung U_{DC,EL} der an der Ausgangskapazität 4 anliegenden DC-Spannung U_{DC,4} angenähert (synchronisiert) werden. Bei erfolgter Annäherung bzw. Synchronisation der beiden DC-Spannungen U_{DC,EL} und U_{DC,4} kann dann in einem optionalen zehnten Schritt S10 die DC-Trenneinheit 5 geschlossen werden, wodurch der DC-Wandleranschluss 3.2 des AC/DC-Wandlers niederimpedant mit dem Elektrolyseur 22 verbunden wird. Beim Schließen der DC-Trenneinheit 5 kann je nach Art der erfolgten Synchronisation zunächst lediglich der Vorladeschalter 5.2 und erst danach der weitere Schalter 5.3 geschlossen werden. Bei hinreichend kleiner Spannungsdifferenz der DC-Spannungen kann jedoch auf ein sequentielles Schließen des Vorladeschalters 5.1 und des weiteren Schalters 5.3 verzichtet werden und direkt der weitere Schalter 5.3 geschlossen werden. Der neunte und der zehnte Schritt S9, S10 sind nur dann erforderlich, wenn in dem fünften Schritt S5 die DC-Trenneinheit auch geöffnet wurde. Entsprechend ist ihre optionale Eigenschaft in Fig. 2 ebenfalls durch eine gestrichelt dargestellte Umrahmung symbolisiert. In einem elften Schritt S11 nimmt der Elektrolyseur 22 gesteuert durch die zentrale Steuerungseinheit 40 in Verbindung mit den Steuerungseinheiten 8, 25 von Versorgungseinheit 10 und Elektrolyseeinheit 20 seinen Normal-Betrieb auf, bei dem die elektrolytische Zersetzung von Wasser H₂O in seine Bestandteile Sauerstoff O₂ und Wasserstoff H₂ erfolgt.

Das Flussdiagramm in Fig. 2 wurde am Beispiel der Elektrolyseanlage 50 aus Fig. 1 erläutert, bei der die DC-Trenneinheit 5 eine einen Vorladewiderstand 5.1 aufweisende Vorladeeinheit umfasst. Das Flussdiagramm ist jedoch in leicht modifizierter Form auch auf eine DC-Trenneinheit übertragbar, die als Vorladeeinheit für die Ausgangskapazität 4 einen von dem Elektrolyseur 22 in Richtung der Ausgangskapazität 4 tiefsetzenden DC/DC-Wandler aufweist. Konkret würde dann in dem dritten Schritt S3 der zuvor deaktivierte DC/DC-Wandler aktiviert, in dem siebten Schritt S7 deaktiviert und in dem zehnten Schritt S10 wieder aktiviert und gegebenenfalls über einen parallel den DC/DC-Wandler überbrückenden Schalter niederohmig gebrückt.

In **Fig. 3a** wird der Revers-Betrieb des Festoxid-Elektrolyseurs 22 aus Fig. 1 detailliert beschrieben, wobei die in den Festoxid-Elektrolysezellen des SOEC-Elektrolyseurs 22 ablaufenden Prozesse schematisch illustriert sind. In dem Revers-Betrieb operiert der Elektrolyseur als DC-Quelle und erzeugt an seinen Anschlüssen 304, 305, die denen des Anschlusses 21 aus Fig. 1 entsprechen, eine DC-Spannung. Mit der DC-Spannung lässt sich eine DC-Last 310 versorgen, welche in Fig. 3a gestrichelt dargestellt ist. Im Rahmen des mit Bezug auf Fig. 1 und Fig. 2 beschriebenen Verfahrens wird die DC-Last 310 hauptsächlich durch die aufzuladende Ausgangskapazität 4 und/oder den Vorladewiderstand 5.1 der DC-Trenneinheit 5 gebildet.

In dem Revers-Betrieb wird an Kathoden 303 der Elektrolysezellen ein Sauerstoffhaltiges Gas, z.B. aus der Umgebung entnommene und gefilterte Luft, sowie an Anoden 301 der Elektrolysezellen Wasserstoff H₂ als Brenngas bereitgestellt. Die Wasserstoffmoleküle H₂ werden dabei an den Anoden 301 unter Elektronenabgabe an die Anoden 301 zunächst zu positiv geladenen Wasserstoff-Ionen H⁺ oxidiert. Die Elektronen fließen über die außen angeschlossene DC-Last 310 zu den Kathoden. An den Kathoden 303 werden die dort vorhandenen, aus der Luft bereitgestellten Sauerstoffmoleküle O₂ unter Aufnahme von jeweils zwei Elektronen e⁻ zu zweifach negativ geladenen Sauerstoff-Ionen O²⁻ reduziert. Die negativ geladenen Sauerstoff-Ionen O²⁻ diffundieren aufgrund des Konzentrationsgefälles durch einen Elektrolyten 302 der Elektrolysezellen in Richtung der Anoden 301, wo sie mit den dort vorhandenen positiv geladenen Wasserstoff-Ionen H⁺ zu molekularem Wasser H₂O reagieren. Das Wasser H₂O wird in Form von Wasserdampf zusammen mit den an den Anoden 301 vorhandenen Restgasen (z.B. unverbrauchtes Brenngas) abgepumpt bzw. durch das zugeführte Brenngas von den Anoden 301 weggespült. Auf der Seite der Kathoden 303 wird die verbrauchte, Sauerstoff-abgereicherte Luft durch die zugeführte Luft von den Kathoden 303 weggespült. Es ergeben sich so an den Anoden 301 und Kathoden 303 die in der Tabelle in Fig. 3a dargestellten chemischen Teilreaktionen:

| | | | |
|---|---|---|---|
| Anode: | H2 + O²⁻ | => | H₂O + 2 e⁻ |
| Kathode: | O₂ + 4e⁻ | => | 2 O²⁻ |

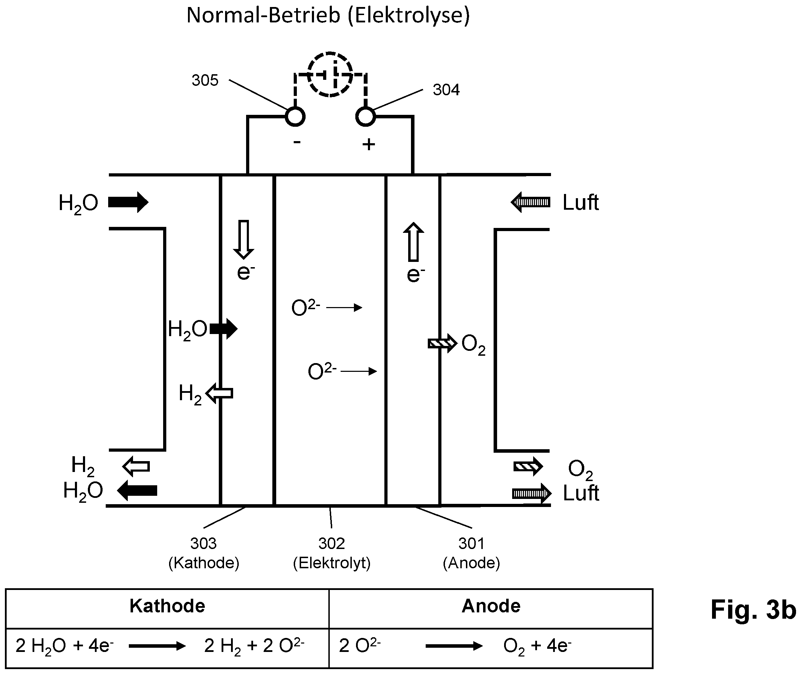

In **Fig. 3b** ist der Normal-Betrieb des SOEC-Elektrolyseurs 22 zusammen mit den in den Elektrolysezellen ablaufenden Prozessen dargestellt. Im Normal-Betrieb ist der Elektrolyseur 22 über die geschlossene DC-Trenneinheit 5 niederohmig mit dem DC-Wandleranschluss 3.2 und der Ausgangskapazität 4 verbunden. Auch die AC-Trenneinheit 2 der Versorgungseinheit 10 ist geschlossen und der AC/DC-Wandler 3 operiert als Gleichrichter, der elektrische Leistung dem AC-Netz 30 entnimmt und die gleichgerichtete elektrische Leistung dem Elektrolyseur 22 zur Durchführung der Elektrolysereaktion zur Verfügung stellt.

Im Normal-Betrieb operiert der Elektrolyseur 22 als eine DC-Last, die von der Versorgungseinheit 10, insbesondere deren AC/DC-Wandler 3 elektrisch versorgt wird. Hierzu ist die Kombination aus AC-Netz 30, AC/DC-Wandler 3 und Ausgangskapazität 4 in Fig. 3c durch die mit den Anschlüssen 304, 305 verbundene und gestrichelt dargestellte DC-Quelle 311 symbolisiert.

Im Normal-Betrieb des Elektrolyseurs 22 wird an den Kathoden 303 Wasser H₂O in Form von Wasserdampf bereitgestellt. Die Wassermoleküle werden dort in positiv geladene Wasserstoff-Ionen H+ und zweifach negativ geladene Sauerstoff-Ionen O²⁻ aufgespalten. Die positiv geladenen Wasserstoff-Ionen H+ werden unter Elektronenaufnahme zu molekularem Wasserstoff H₂ reduziert, die zweifach negativ geladenen Sauerstoff-Ionen O²⁻ diffundieren - angetrieben durch ein Konzentrationsgefälle und das sich in den Elektrolysezellen über die DC-Quelle 311 aufgeprägte elektrische Feld - in Richtung der Anoden 301. An den Anoden 301 angekommen, werden sie dort unter Elektronenabgabe zu molekularem Sauerstoff O₂ oxidiert. Der an der Anode abgeschiedene Sauerstoff kann durch die Zuführung von z.B. aus der Umgebung entnommene und gefilterte Luft aus dem System gespült werden. Auf der Kathodenseite nicht verbrauchter Wasserdampf wird zusammen mit dem erzeugten Wasserstoff durch den nachgeführten Wasserdampf von der Kathode weggespült und kann in einem nachfolgenden Schritt thermisch und/oder stofflich recycelt werden. Anstatt Wasserstoff als Brenngas im Revers-Betrieb wird im Normal-Betrieb Wasserdampf als "Brenngas" zugeführt. Auf der Luftseite kann weiterhin Luft herangeführt werden, um die Sauerstoffkonzentration an der Oberfläche des Elektrolyten 302 einzustellen. Im Normal-Betrieb ergeben sich so die in der Tabelle in Fig. 3c dargestellten Teilreaktionen:

| | | | |
|---|---|---|---|
| Anode: | 2 O²⁻ | => | O₂ + 4 e⁻ |
| Kathode: | 2 H₂O + 4 e⁻ | => | 2 H₂ + 2 O²⁻ |

Eine Geschwindigkeit der Elektrolysereaktion - und damit die elektrolytische Erzeugungsrate von Wasserstoff H₂, kann unter anderem über den AC/DC-Wandler 3 der Versorgungseinheit 10 geregelt beziehungsweise eingestellt werden.

Die Vorzeichen der an Anode und Kathode anliegenden Spannungen kehren sich von Fig. 3a zu Fig. 3b um. Zusätzlich wird jedoch diejenige Elektrode, die im Revers-Betrieb die Anode ausbildet, aufgrund der dort im Normal-Betrieb ablaufenden Reduktion zur Kathode im Normal-Betrieb. Umgekehrt wird diejenige Elektrode, die im Revers-Betrieb die Kathode darstellt, aufgrund der in dem Normal-Betrieb ablaufenden Oxidation zur Anode im Normal-Betrieb. In Summe bleiben die Vorzeichen der an den jeweiligen Elektroden anliegenden DC-Spannungen bei dem Wechsel von dem Revers-Betrieb in den Normal-Betrieb unverändert. Bei dem Übergang vom Revers-Betrieb in den Normal-Betrieb kann, die DC-Trenneinheit 5 der Versorgungseinheit 10 geöffnet werden. Dies ist jedoch nicht zwingend erforderlich.

### Bezugszeichenliste

- 2: AC-Trenneinheit
- 3: AC/DC-Wandler
- 3.1: AC-Wandleranschluss
- 3.2: DC-Wandleranschluss
- 4: Ausgangskapazität
- 5: DC-Trenneinheit
- 5.1: Vorladewiderstand
- 5.2: Vorladeschalter
- 5.3: Schalter
- 6, 7: Spannungssensoren
- 8: Steuerungseinheit (der Versorgungseinheit)
- 10: Versorgungseinheit
- 11: AC-Anschluss
- 12: DC-Anschluss
- 20: Elektrolyseeinheit
- 21: Anschluss
- 22: Elektrolyseur
- 23: Gasversorgungseinrichtung
- 24: Heizeinrichtung
- 25: Steuerungseinheit (der Elektrolyseeinheit)
- 30: AC-Netz
- 31: Netzanschlusspunkt
- 32: Transformator
- 32.P: Primärseite
- 32.S: Sekundärseite
- 40: Steuerungseinheit
- 50: Elektrolyseanlage
- 301: Anode
- 302: Elektrolyt
- 303: Kathode
- 304, 305: Anschluss
- 310: DC-Last
- 311: DC-Quelle
- S1-S11: Verfahrensschritt

## Patentansprüche

1. Verfahren zum Aufstarten einer Elektrolyseanlage (50) umfassend einen Elektrolyseur (22) und eine als Gleichrichter operierende Versorgungseinheit (10), wobei die Versorgungseinheit (10) einen mit einem AC-Netz (30) verbundenen AC-Anschluss (11), einen mit dem Elektrolyseur (22) verbundenen DC-Anschluss (12) und einem zwischen dem AC-Anschluss (11) und dem DC-Anschluss (12) angeordneten AC/DC-Wandler (3) aufweist,
**mit den Schritten:**
- Aufladen einer mit einem DC-Wandleranschluss (3.2) des AC/DC-Wandlers (3) verbundenen Ausgangskapazität (4) durch Betreiben des Elektrolyseurs (22) in einem Revers-Betrieb als DC-Spannungsquelle in einem mit dem Elektrolyseur (22) verbundenen und von dem AC-Netz (30) getrennten Zustand des AC/DC-Wandlers (3),
- Verbinden des AC/DC-Wandlers (3) mit dem AC-Netz (30),
- Betriebsumkehr des Elektrolyseurs (22) von dem Revers-Betrieb in einen Normal-Betrieb als DC-Last, und
- Betreiben des Elektrolyseurs (22) in dem Normal-Betrieb als DC-Last mit einer über die Versorgungseinheit (10) aus dem AC-Netz (30) entnommenen und über den AC/DC-Wandler (3) gleichgerichteten elektrischen Leistung.

2. Verfahren nach Anspruch 1, wobei die Ausgangskapazität (4) auf eine DC-Spannung U_{DC,4} aufgeladen wird, deren Wert zumindest einem Gleichrichtwert, bevorzugt zumindest einer einfachen Amplitude Û₁₁, besonders bevorzugt zumindest einer zweifachen Amplitude Û₁₁ der an dem AC-Anschluss (11) anliegenden AC-Spannung entspricht.

3. Verfahren nach Anspruch 1 oder 2, wobei vor dem Verbinden des AC/DC-Wandlers (3) mit dem AC-Netz (30) eine AC-Spannung von dem AC/DC-Wandler (3) generiert und mit einer an dem AC-Anschluss (11) der Versorgungseinheit (10) anliegenden AC-Spannung synchronisiert wird.

4. Verfahren nach einem der vorangehenden Ansprüche, wobei für die Betriebsumkehr ein Trennen des AC/DC-Wandlers (3) von dem Elektrolyseur (22) erfolgt, die Betriebsumkehr des Elektrolyseurs (22) von dem Revers-Betrieb in den Normal-Betrieb in einem von dem AC/DC-Wandler (3) getrennten Zustand des Elektrolyseurs (22) erfolgt, und wobei nach erfolgter Betriebsumkehr der AC/DC-Wandler (3) mit dem Elektrolyseur (22) wieder verbunden wird.

5. Verfahren nach Anspruch 4, wobei das Trennen des AC/DC-Wandlers (3) von dem Elektrolyseur (22) erst dann erfolgt, wenn der AC/DC-Wandler (3) mit dem AC-Netz (30) verbunden ist.

6. Verfahren nach einem der Ansprüche 1 bis 5, wobei ein eine DC-Spannung U_{DC,EI} > 0V aufweisender Anschluss (21) des Elektrolyseurs (22) über einen Vorladewiderstand (5.1) oder über einen Gleichspannungswandler mit der Ausgangskapazität (4) verbunden wird.

7. Verfahren nach einem der Ansprüche 1 bis 5, wobei der Elektrolyseur (22) in einem zumindest weitgehend spannungsfreien Zustand seines Anschlusses (21) U_{DC,EL} ≈ 0V mit der Ausgangskapazität (4) der Versorgungseinheit (10) verbunden wird, und in einem mit der Versorgungseinheit (10) verbundenen Zustand in den Revers-Betrieb versetzt wird.

8. Elektrolyseanlage (50) mit einer einen Elektrolyseur (22) umfassenden Elektrolyseeinheit (20) und einer den Elektrolyseur (22) aus einem AC-Netz (30) speisenden Versorgungseinheit (10), wobei die Versorgungseinheit (10)
- einen AC-Anschluss (11) zum Anschluss eines AC-Netzes (30),
- einen DC-Anschluss (12) zum Anschluss des Elektrolyseurs (22),
- einen zwischen dem AC-Anschluss (11) und dem DC-Anschluss (12) angeordneten AC/DC-Wandler (3),
- eine AC-Trenneinheit (2) zum Verbinden eines AC-Wandleranschlusses (3.1) des AC/DC-Wandlers (3) mit dem AC Anschluss (11), und
- eine DC-Trenneinheit (5) zum Verbinden eines DC-Wandleranschlusses (3.2) des AC/DC-Wandlers (3) mit dem DC-Anschluss (12) umfasst,
**dadurch gekennzeichnet, dass** die Elektrolyseanlage (50)
- zudem eine Steuerungseinheit (40) zur Steuerung der Elektrolyseanlage (50) umfasst und
- zur Durchführung des Verfahrens nach einem der vorangehenden Ansprüche eingerichtet ist.

9. Elektrolyseanlage (50) nach Anspruch 8, **dadurch gekennzeichnet, dass** die Versorgungseinheit (10) frei von einer AC-seitigen Vorladeeinheit, insbesondere einem AC-seitigen Vorladewiderstand ist.

10. Elektrolyseanlage (50) nach Anspruch 8 oder 9, **dadurch gekennzeichnet, dass** die DC-Trenneinheit (5) der Versorgungseinheit (10) eine Serienschaltung aus einem Vorladewiderstand (5.1) und einem Vorladeschalter (5.2) und einen parallel zu der Serienschaltung angeordneten Schalter (5.3) beinhaltet, oder dass die DC-Trenneinheit (5) einen Gleichspannungswandler und optional einen parallel zu dem Gleichspannungswandler angeordneten Schalter beinhaltet.

11. Elektrolyseanlage (50) nach einem der Ansprüche 8 bis 10, **dadurch gekennzeichnet, dass** die Versorgungseinheit (10) Spannungssensoren (6, 7) aufweist, die zur Detektion einer über die AC-Trenneinheit (2) abfallenden AC-Spannung und/oder einer über die DC-Trenneinheit (5) abfallenden DC-Spannung ausgelegt sind.

12. Elektrolyseanlage (50) nach einem der Ansprüche 8 bis 11, **dadurch gekennzeichnet, dass** die Steuerungseinheit (40) als separate Steuerungseinheit (40) ausgebildet ist, die zur Steuerung der Versorgungseinheit (10) als auch der Elektrolyseeinheit (20) ausgelegt ist, oder dass die Steuerungseinheit (40) zumindest teilweise in eine Steuerung (8) der Versorgungseinheit (10) und/oder eine Steuerung (25) der Elektrolyseeinheit (20) integriert ist.

13. Elektrolyseanlage (50) nach einem der Ansprüche 8 bis 12, **dadurch gekennzeichnet, dass** der AC/DC-Wandler (3) eine transistorbasierte Brückenschaltung aufweist.

14. Elektrolyseanlage (50) nach einem der Ansprüche 8 bis 13, **dadurch gekennzeichnet, dass** die Versorgungseinheit (10) ein passives Filter, insbesondere ein LC-Filter oder ein LCL-Filter zur Filterung taktfrequenter Störströme aufweist.

15. Elektrolyseanlage (50) nach einem der Ansprüche 8 bis 14, **dadurch gekennzeichnet, dass** der AC/DC-Wandler (3) für einen bidirektionalen Leistungsfluss ausgelegt ist.

16. Elektrolyseanlage (50) nach einem der Ansprüche 8 bis 15, **dadurch gekennzeichnet, dass** der Elektrolyseur als ein Festoxid-Elektrolyseur oder als ein PEM-Elektrolyseur ausgebildet ist und eingerichtet ist, elektrische Energie aus einem chemischen Energieträger im Revers-Betrieb bereitzustellen.
